# EUROPÄISCHE PATENTANMELDUNG

(11) **EP 3 771 524 A1**
(43) Veröffentlichungstag der Anmeldung: **03.02.2021**
(21) Anmeldenummer: 20179248.8
(22) Anmeldetag: 10.06.2020
(51) Int. Cl.: B25J 15/00

(54) **HALTEVORRICHTUNG MIT MAGNETORHEOLOGISCHER FLÜSSIGKEIT, ROBOTER, MASCHINE, FLASCHENVERSCHLUSSVORRICHTUNG UND HALTEVERFAHREN**

(30) Priorität: 30.07.2019 DE 102019211269
(71) Anmelder: Robert Bosch GmbH, 70442 Stuttgart (DE)
(72) Erfinder: Stichlmair, Hans, 75446 Wiernsheim (DE); Link, Uwe, 74354 Besigheim (DE); Ziegler, Richard, 71546 Aspach (DE)

(57) **Zusammenfassung**

Haltevorrichtung (100), umfassend einen Magneten (130) und ein Halteelement (101), wobei das Halteelement (101) wenigstens eine flexible Außenwand (110) und eine magnetorheologische Flüssigkeit (120) umfasst, wobei die magnetorheologische Flüssigkeit (120) in einer Kammer (105) des Halteelementes (101) angeordnet ist, welche zumindest teilweise von der flexiblen Außenwand (110, 260, 261) verschlossen ist, wobei die Haltevorrichtung (100) dazu eingerichtet ist, eine Viskosität der magnetorheologischen Flüssigkeit (120) des Halteelements (101) mittels des Magneten (130) zu erhöhen, so dass ein Objekt (190), welches einen flächigen und dreidimensionalen Kontakt mit der flexiblen Außenwand (110) aufweist, formschlüssig gehalten ist.

## Beschreibung

Die vorliegende Erfindung betrifft eine Haltevorrichtung aufweisend ein Halteelement, wobei das Halteelement eine flexible Außenwand und eine magnetorheologische Flüssigkeit umfasst. Die Erfindung betrifft auch einen Roboter mit dieser Haltevorrichtung und eine Maschine mit der Haltevorrichtung. Ferner betrifft die Erfindung eine Flaschenverschlussvorrichtung mit der Haltevorrichtung. Außerdem betrifft die Erfindung ein Halteverfahren zum Halten beziehungsweise Greifen eines Objektes.

### Stand der Technik

Die Schrift EP 2 773 883 B1 offenbart eine Feststell- und Lösevorrichtung. Ein offenbarter Aufbau besteht aus einer Kolbenstange, auf der eine magnetfelderzeugende Spule sitzt. Stirnseitig sind an der Spule jeweils ein Formkörper aus einem magnetorheologischen Elastomer (MRE) angeordnet. Der Formkörper dehnt sich beim Anlegen eines Magnetfeldes radial aus. Die Bewegungsfreiheit der inneren Kolbenstange wird dadurch gehemmt.

Das Dokument WO 2018/228719 A1 offenbart einen Tubenhalter mit einer Spannvorrichtung, mittels der auf eine Tube eine Spannkraft aufgebracht werden kann. Die Spannvorrichtung kann eine magnetorheologische Flüssigkeit aufweisen.

Die Schrift GB 2516334 A offenbart einen Becherhalter für ein Fahrzeug mit einer magnetorheologischen Flüssigkeit.

Als magnetorheologische Flüssigkeit (MRF) bezeichnet man eine Suspension von magnetisch polarisierbaren Partikeln, welche in einer Trägerflüssigkeit fein verteilt sind, beispielsweise werden Partikel umfassend Carbonyleisen mit einem Durchmesser von 10 Nanometer bis 10 Mikrometer verwendet. Als Trägerflüssigkeiten werden vorzugsweise Öle, Ethylenglycol und/oder Wasser eingesetzt. Außerdem kann die Suspension weitere Hilfsstoffe aufweisen, beispielsweise zur Einstellung einer Langzeitstabilisation beziehungsweise Vermeidung von Ausfällungen und/oder Absetzung in der Suspension und/oder zur einer Anpassung der Viskosität der Suspension. Der Anteil des Eisenpulvers beträgt zum Beispiel vorteilhafterweise 0-90 % des Gewichts und 20-40 % des Volumens.

Die Aufgabe der vorliegenden Erfindung ist es, eine Haltevorrichtung mit einer magnetorheologischen Flüssigkeit zu verbessern.

### Offenbarung der Erfindung

Die vorstehende Aufgabe wird gemäß der unabhängigen Ansprüche 1, 14, 15, 16 und 17 gelöst.

Die vorliegende Erfindung betrifft eine Haltevorrichtung. Die Haltevorrichtung umfasst wenigstens einen Magneten, insbesondere einen Elektromagneten. Der Magnet kann alternativ oder zusätzlich auch als ein beweglicher Permanentmagnet ausgeführt sein. Ferner ist an der Haltevorrichtung wenigstens ein Halteelement angeordnet, wobei das Halteelement wenigstens eine flexible Außenwand und eine magnetorheologische Flüssigkeit beziehungsweise ein magnetorheologisches Elastomer umfasst. Die Außenwand ist vorteilhafterweise elastisch. Mit anderen Worten umfasst die Außenwand bevorzugt ein Elastomer. Die magnetorheologische Flüssigkeit ist in einer Kammer des Halteelementes angeordnet, wobei die Kammer zumindest teilweise von der flexiblen Außenwand verschlossen ist. Mit anderen Worten wird die magnetorheologische Flüssigkeit in der Kammer des Halteelements zumindest teilweise mittels der flexiblen Außenwand eingeschlossen. Die Haltevorrichtung ist dazu eingerichtet, mit der flexiblen Außenwand des Halteelements ein Objekt flächig und dreidimensional mechanisch zu kontaktieren. Ferner ist die Haltevorrichtung dazu eingerichtet, eine Viskosität der magnetorheologischen Flüssigkeit des Halteelements mittels des Magneten zu verändern beziehungsweise zu erhöhen, so dass das Objekt nach der Erhöhung der Viskosität mittels der Haltevorrichtung formschlüssig gehalten ist. Vorteilhafterweise ist die Haltevorrichtung dazu eingerichtet, das Halten beziehungsweise ein Fixieren des Objektes durch Reduktion der Viskosität danach zu lösen, wobei die Viskosität beispielsweise durch Abschaltung des Stroms in dem Elektromagneten oder eine Rücksetzung eines Permanentmagneten aus einem magnetischen Kreis mit der magnetorheologischen Flüssigkeit reduziert wird. Die erfindungsgemäße Haltevorrichtung weist den Vorteil auf, dass unterschiedlich große und/oder unterschiedlich geformte Objekte formschlüssig und zuverlässig gehalten werden können. Ferner können auch mechanisch empfindliche beziehungsweise filigrane Objekte mittels der Haltevorrichtung gehalten und bewegt werden, da die Haltekräfte der Haltevorrichtung auf das Objekt klein sind.

In einer bevorzugten Ausgestaltung umschließt die flexible Außenwand die Kammer vollständig beziehungsweise bildet die flexible Außenwand einen verschlossenen Beutel, wobei der Beutel in seinem Inneren die Kammer mit der magnetorheologische Flüssigkeit umfasst. Dadurch ist vorteilhafterweise die Kammer mit der magnetorheologischen Flüssigkeit im Inneren des Beutels angeordnet, wobei der Beutel mit der flexiblen Außenwand zusätzlich vorzugsweise eine Abdichtung für die magnetorheologische Flüssigkeit bildet beziehungsweise realisiert.

Es kann ferner vorgesehen sein, dass das Halteelement wenigstens ein Positionierungselement in der Kammer aufweist, welches dazu eingerichtet ist, den verschlossenen Beutel in dem Halteelement innerhalb von Ausbuchtungen oder Durchgangsöffnungen des Beutels zu positionieren und/oder um einen mechanischen Anschlag für ein zu haltendes Objekt in dem Halteelement zu bilden. Dadurch wird vorteilhafterweise eine Montage der Haltevorrichtung vereinfacht und/oder eine Positionierung des Objektes in der Haltevorrichtung begrenzt.

Vorzugsweise umfasst das Haltevorrichtung einen Drucksensor, welcher dazu eingerichtet ist, einen Druck der magnetorheologischen Flüssigkeit in der Kammer und/oder einer Ausweichkammer zu erfassen. Dadurch kann vorteilhafterweise die Viskosität der magnetorheologischen Flüssigkeit beziehungsweise der Druck in der Kammer und/oder der Ausweichkammer erfasst beziehungsweise überwacht werden, so dass vorteilhafterweise Haltekräfte zum Halten des Objektes begrenzt werden.

In einer Ausführung kann es vorgesehen sein, dass die flexible Außenwand dazu eingerichtet ist, ausgerollt zu werden, sobald ein flächiger und dreidimensionaler Kontakt mit dem Objekt vorliegt. Vorteilhafterweise ist dieses Ausrollen reversibel, d.h. bei Lösung des Objektes von der Haltevorrichtung nach der Reduktion der Viskosität der magnetorheologischen Flüssigkeit wird die flexible Außenwand in die ursprüngliche Lage durch einrollen der flexiblen Außenwand zurückgeführt. Durch diese Ausführung kann ein großes Maß an Formschluss zum Halten komplexer oder empfindlicher Objektformen des zu haltenden Objektes erfolgen.

In einer weiteren Ausführung weist das Halteelement eine Ausweichkammer auf. Die Ausweichkammer ist insbesondere benachbart zu der Kammer mit der magnetorheologischen Flüssigkeit angeordnet. Zwischen der Kammer und der Ausweichkammer ist insbesondere ein Kanal und/oder ein verschließbares Durchlassventil angeordnet. Die Ausweichkammer ist dazu eingerichtet, bei dem flächigen und dreidimensionalen Kontakt mit dem zu greifenden Objekt zumindest einen Teil einer aus der Kammer verdrängten rheologischen Flüssigkeit aufzunehmen. Dadurch resultiert der Vorteil, dass ein Druckanstieg innerhalb der Kammer des Halteelements gering ist oder vermieden werden kann, so dass Haltekräfte auf das zu greifende Objekt reduziert werden.

In einer besonders bevorzugten Ausgestaltung umfasst die Haltevorrichtung zusätzlich wenigstens ein Greifelement beziehungsweise eine Greiferbacke. Vorteilhafterweise weist die Haltevorrichtung mindestens zwei Greifelemente auf, insbesondere umfasst die Haltevorrichtung drei Greifelemente. Ferner weist die Haltevorrichtung wenigstens eine Verstelleinheit auf. Die Verstelleinheit ist dazu eingerichtet, eine Position des Greifelements zu verändern beziehungsweise das Greifelement zu bewegen. Mit anderen Worten ist das Greifelement der Haltevorrichtung beweglich. Vorteilhafterweise ist die Verstelleinheit dazu eingerichtet, das Greifelement linear zu verschieben. Beispielsweise ist die Verstelleinheit eine Linearschiene. Optional umfasst die Verstelleinheit einen Elektromotor. Vorteilhafterweise ist die Verstelleinheit dazu eingerichtet, mehrere Greifelemente gleichzeitig zu bewegen. Die Haltevorrichtung ist dazu eingerichtet, ein zu haltendes beziehungsweise zu greifendes Objekt durch Veränderung der Position des Greifelements mittels der Verstelleinheit beziehungsweise das Objekt durch Bewegung des Greifelements mechanisch einzuspannen. Die Einspannung erfolgt vorteilhafterweise zwischen mindestens zwei Greifelementen oder zwischen mindestens einem Greifelement und einem mechanischen Anschlag. Dabei erzeugt beziehungsweise bildet das Objekt im eingespannten Zustand den flächigen und dreidimensionalen mechanischen Kontakt mit der flexiblen Außenwand des Halteelements aus. Mit anderen Worten ist die Haltevorrichtung dazu eingerichtet, das Objekt mittels des wenigstens einen Greifelements gegen das zumindest eine Halteelement einzuspannen. Die Haltevorrichtung weist den Vorteil auf, dass unterschiedlich große und/oder unterschiedlich geformte Objekte formschlüssig ohne weitere Zuführung zu der Haltevorrichtung gehalten beziehungsweise gegriffen werden können. Ferner können auch mechanisch empfindliche beziehungsweise filigrane Objekte mittels der Haltevorrichtung ohne weitere Zuführung gehalten und bewegt werden.

In einer bevorzugten Ausgestaltung ist das Halteelement an einem mechanischen Anschlag der Haltevorrichtung angeordnet, wobei der mechanische Anschlag der Haltevorrichtung insbesondere an der Haltevorrichtung fixiert beziehungsweise unbeweglich ist. Der mechanische Anschlag beziehungsweise das Halteelement sind somit in dieser Ausgestaltung insbesondere nicht an dem Greifelement angeordnet. Die Haltevorrichtung ist vorteilhafterweise dazu eingerichtet, das zu greifende Objekt zwischen dem beweglichen Greifelement und dem unbeweglichen mechanischen Anschlag mit dem Halteelement zu halten beziehungsweise einzuspannen. Dadurch entsteht der Vorteil, dass beispielsweise ein bekanntes Greifelement und eine bekannte Verstelleinrichtung für die Haltevorrichtung verwendet werden können, so dass die Haltevorrichtung einfach und günstig hergestellt werden kann. Des Weiteren entsteht der Vorteil, dass der Magnet sowie die elektrischen Zuleitungen zur Ansteuerung des Magneten einfacher und kostengünstiger angeordnet werden können. Ferner kann in dieser Ausgestaltung das Halteelement vorteilhafterweise größer ausgestaltet werden, insbesondere die flexible Außenwand. Dadurch wird das Greifen zuverlässiger.

In einer weiteren Ausführung der Haltevorrichtung ist das Halteelement am Greifelement beziehungsweise der Greiferbacke angeordnet. Dadurch entsteht der Vorteil, dass ein sanftes Einspannen und Halten eines mechanisch empfindlichen Objektes auch unmittelbar an dem Greifelement realisiert wird. Mit anderen Worten kann in dieser Ausführung auch eine leicht zu beschädigende Seitenfläche des Objektes, welche vom Greifelement kontaktiert beziehungsweise eingespannt wird, sicher, zuverlässig und ohne Beschädigung formschlüssig gehalten werden.

In einer Weiterführung umfasst die Haltevorrichtung wenigstens einen Magnetkern, wobei der Magnetkern zwischen dem Magneten und der magnetorheologischen Flüssigkeit des Halteelements angeordnet ist. Durch diese Ausgestaltung kann der Magnet in einer größeren Entfernung zu dem Halteelement angeordnet werden, so dass die Haltevorrichtung vorteilhafterweise in einem Bereich, welcher das Halteelement und das Greifelement umfasst weniger Bauraum benötigt.

Es kann in einer weiteren Ausgestaltung vorgesehen sein, dass die Haltevorrichtung mehrere Magnetkerne umfasst, welche insbesondere mehrere Magnetkreise mit beziehungsweise zu unterschiedlichen Halteelementen ausbilden. Die Haltevorrichtung ist in dieser Ausführung dazu eingerichtet, mittels des Magneten die Viskosität einer jeweiligen magnetorheologischen Flüssigkeit in mehreren Halteelemente gleichzeitig zu verändern. Dadurch kann vorteilhafterweise eine Viskosität der jeweiligen magnetorheologischen Flüssigkeit in einer Vielzahl an Halteelementen mit nur einem Magneten, insbesondere einem Elektromagneten, gleichzeitig erhöht beziehungsweise verändert werden. Dies erlaubt das Halten beziehungsweise Greifen sehr empfindlicher Objekte und eine vergleichsweise einfache und kostengünstige Herstellung der Haltevorrichtung.

In einer alternativen Ausgestaltung weist die Haltevorrichtung als Magnet einen Permanentmagneten auf, wobei der Permanentmagnet beweglich ist, wobei die Haltevorrichtung insbesondere dazu eingerichtet ist den Permanentmagneten mittels eines Tasters oder eines elektrischen Aktors in einen Bereich des Halteelements zu bewegen. Vorteilhafterweise ist der Permanentmagnet dazu eingerichtet, mittels des Aktors mit der magnetorheologischen Flüssigkeit und/oder einem Magnetkreis beziehungsweise einem Magnetkern in Kontakt gebracht werden zu können. Der Aktor ist dazu eingerichtet, den Permanentmagneten zu bewegen, insbesondere zu verschieben. Der Aktor ist beispielsweise ein Elektromotor mit einer Linearschiene oder eine manuell durch einen Nutzer zu betätigende Druckfedervorrichtung. In dieser Ausführung resultiert der Vorteil, dass die Haltevorrichtung weniger elektrische Leistung verbraucht.

In einer weiteren Ausgestaltung weist jedes der Greifelemente jeweils einen Magneten und ein Halteelement auf. Dadurch kann vorteilhafterweise eine zuverlässige formschlüssige Halterung mittels der Haltevorrichtung realisiert werden.

Die Erfindung betrifft auch einen Roboter mit der erfindungsgemäßen Haltevorrichtung.

Die Erfindung betrifft auch eine Maschine mit der erfindungsgemäßen Haltevorrichtung, insbesondere eine Montagemaschine, eine Verpackungsmaschine für die Lebensmittelindustrie oder einen 3D-Drucker beziehungsweise eine Maschine zur Erzeugung von dreidimensionalen Komponenten beziehungsweise eine Maschine zur additiven Fertigung von Bauteilen.

Die Erfindung betrifft auch eine Flaschenverschlussvorrichtung mit einer erfindungsgemäßen Haltevorrichtung, insbesondere ist die Flaschenverschlussvorrichtung dazu eingerichtet, Weinflaschen und/oder Sektflaschen luftdicht reversibel zu halten und zu verschließen. Die Flaschenverschlussvorrichtung weist den Vorteil einer einfachen Bedienbarkeit und eines schnellen Verschlusses auf.

Die Erfindung betrifft ferner ein Halteverfahren zum Halten beziehungsweise Greifen eines Objektes mittels der Haltevorrichtung. Das Verfahren beginnt mit einer Bereitstellung des Objektes. In einem optionalen Schritt erfolgt anschließend eine Bewegung der Haltevorrichtung zum Objekt. Anschließend erfolgt optional eine Veränderung einer Position wenigstens eines Greifelements der Haltevorrichtung bis das Objekt zwischen dem Greifelement und dem Halteelement in der Haltevorrichtung mechanisch eingespannt ist beziehungsweise ein Kraftschluss erfolgt. Das Objekt weist, insbesondere im eingespannten Zustand, einen flächigen und dreidimensionalen mechanischen Kontakt zu einer flexiblen Außenwand mindestens eines Halteelements der Haltevorrichtung auf. Vorteilhafterweise resultiert eine geringe Haltekraft durch die Flexibilität der Außenwand und/oder einem Ausweichen der magnetorheologischen Flüssigkeit des Halteelements. Es kann optional vorgesehen sein, dass die Außenwand beim flächigen Kontakt mit dem Objekt ausgerollt wird, wodurch die Haltekraft klein gehalten und ein großflächigerer Kontakt zum Objekt beziehungsweise eine verbesserte Umschließung der Außenkonturen des zu greifenden Objektes resultiert. Anschließend wird eine Erhöhung einer Viskosität einer magnetorheologischen Flüssigkeit des Halteelements durchgeführt, wodurch das Objekt mittels der Haltevorrichtung formschlüssig gehalten wird. Das Verfahren weist den Vorteil auf, dass unterschiedlich große und/oder unterschiedlich geformte Objekte formschlüssig gehalten beziehungsweise gegriffen werden können. Ferner können auch mechanisch empfindliche beziehungsweise filigrane Objekte mittels der Haltevorrichtung gehalten und bewegt werden.

Vorzugsweise erfolgt die Erhöhung der Viskosität der magnetorheologischen Flüssigkeit durch Erhöhung eines Stroms in einem Elektromagneten, wobei der Elektromagnet in magnetischem Kontakt beziehungsweise innerhalb eines Magnetkreises mit der magnetorheologischen Flüssigkeit des Halteelements ist. Die Erhöhung des Stroms in dem Elektromagneten erfolgt vorteilhafterweise schrittweise beziehungsweise langsam. Dadurch können höhe Haltekräfte zum Halten des Objektes vermieden werden.

In einer Weiterführung des Verfahrens erfolgt die Erhöhung der Viskosität der magnetorheologischen Flüssigkeit bis in der Kammer und/oder der Ausweichkammer des Halteelements ein Druck erfasst wird, welcher einen vorgegebenen Schwellenwert überschreitet. Es kann optional vorgesehen sein, dass eine Einstellung des vorgegebenen Schwellenwert durch Eingabe des Nutzers erfolgt, um eine Haltekraft anzupassen. Durch diese Weiterführung wird die Viskosität der magnetorheologischen Flüssigkeit beziehungsweise ein Haltedruck zur Fixierung des Objektes begrenzt, so dass vorteilhafterweise mechanisch sehr empfindliche beziehungsweise sehr filigrane Objekte mittels der Haltevorrichtung gehalten und bewegt werden können.

Weitere Vorteile ergeben sich aus der nachfolgenden Beschreibung von Ausführungsbeispielen mit Bezug zu den Figuren.
- Figur 1a:: Haltevorrichtung
- Figur 1b:: Haltevorrichtung, welche ein Objekt hält
- Figur 2:: Haltevorrichtung mit einem beweglichen Permanentmagneten
- Figur 3:: Haltevorrichtung mit einem Greifelement
- Figur 4:: Halteverfahren

### Ausführungsbeispiele

In Figur la ist eine einfache Ausführung der Haltevorrichtung 100 mit einem Halteelement 101 und einem Magneten 130 zum Halten eines Objektes 190 schematisch dargestellt. Das Halteelement 101 der Haltevorrichtung 100 umfasst ein Gehäuse 160 beziehungsweise einen Container, welches im Innenraum eine Kammer 105 aufweist. Die Kammer 105 weist eine magnetorheologische Flüssigkeit 120 auf. Das Gehäuse 160 beziehungsweise der Container ist mittels eines Deckels 102 verschlossen, wobei der Deckel 102 eine Öffnung 104 aufweist. An einer Innenfläche 103 des Deckels 102 ist eine flexible Außenwand 110 angeordnet. Die flexible Außenwand 110 umfasst eine Folie aus einem Elastomer. Beispielsweise ist die flexible Außenwand 110 an oder mittels des Deckels 102 fixiert, insbesondere ist die flexible Außenwand 110 an der Innenfläche 103 des Deckels 102 verschweißt, geklebt und/oder mittels des Deckels 102 und des Gehäuses 160 dicht verspannt. Die flexible Außenwand 110 bildet in dieser Ausführung einen verschlossenen Beutel, wobei die Kammer 105 mit der magnetorheologischen Flüssigkeit 120 im Inneren des verschlossenen Beutels angeordnet ist. Mit anderen Worten dichtet der Beutel, welcher mittels der flexiblen Außenwand 110 gebildet ist, die Kammer 105 mit der magnetorheologischen Flüssigkeit 120 zur Umgebung der Haltevorrichtung 100 hin ab. Der Beutel ist in dem Gehäuse 160 beziehugnsweise dem Container angeordnet. Alternativ kann es vorgesehen sein, dass die flexible Außenwand 120 eine Folie ist, welche eine Öffnung des Gehäuses 160 oder die Öffnung 104 des Deckels 102 gegenüber der Umgebung der Haltevorrichtung 100 verschließt. Die Viskosität der magnetorheologischen Flüssigkeit 129 des Halteelements 101 wird mittels des Magneten 130 der Haltevorrichtung 100 verändert, insbesondere erhöht oder erniedrigt. Der Magnet 130 ist vorteilhafterweise ein Elektromagnet. Die Haltevorrichtung 100 umfasst in dieser Ausführung einen Magnetkern 150, welcher in dieser Ausführung auch als Schaft zur Aufnahme der Haltevorrichtung 100 in einer mechanischen Einspannvorrichtung dient. Die mechanische Einspannvorrichtung kann beispielsweise an einem Roboterarm oder einer Maschine angeordnet sein (nicht dargestellt). Die Haltevorrichtung 100 ist dazu eingerichtet, ein Objekt 190 durch eine Erhöhung der Viskosität der magnetorheologischen Flüssigkeit formschlüssig zu halten, wobei das Objekt vor der Erhöhung der Viskosität mit der flexiblen Außenwand 120 in einen flächigen und dreidimensionalen Kontakt gebracht ist. Mit anderen Worten, ist die Haltevorrichtung 100 in dieser Ausführung dazu eingerichtet, das Objekt 190, welches durch die Öffnung 104 des Deckels 102 in einen Innenraum des Gehäuses 102 tritt und somit die flexible Außenwand 110 flächig und dreidimensional kontaktiert und verformt, durch Ansteuerung des Elektromagneten 130 zu halten. Die Halterung des Objektes 190 erfolgt aufgrund der erhöhten Viskosität der magnetorheologischen Flüssigkeit bei einem angelegten beziehungsweise erzeugten Magnetfeld des Magneten 130, da durch die verformte flexible Außenwand 110 mittels der magnetorheologischen Flüssigkeit 120 ein steifer Formschluss zwischen der verformten flexiblen Außenwand 110 und dem Objekt 190 erzeugt wird. Dieser Formschluss erfolgt mittels der flexiblen und verformten Außenwand 110 und der magnetorheologischen Flüssigkeit, welche durch den flächigen und dreidimensionalen Kontakt mit dem Objekt 190, in Hinterschneidungen und/oder an Rundungen und/oder an Winkeln und Ecken des Objektes 190 eingreift. Vorteilhafterweise weist die Oberfläche 111 der flexiblen Außenwand 110 einen hohen Reibwert auf. Mit anderen Worten haftet die Oberfläche 111 der flexiblen Außenwand 110 vorteilhafterweise gut an dem Objekt 190 um den Formschluss zu unterstützen. Ein mittels des Objektes 190 verdrängtes Flüssigkeitsvolumen der magnetorheologischen Flüssigkeit 120 weicht in eine Ausweichkammer 140 des Gehäuses 160 beziehugnsweise des Containers der Haltevorrichtung 100 aus. Mit anderen Worten ist die Ausweichkammer 140 dazu eingerichtet ist, nach dem Kontakt der Außenwand 110 mit dem zu haltenden Objekt 190 zumindest einen Teil einer aus der Kammer 105 verdrängten magnetorheologischen Flüssigkeit 120 aufzunehmen. In diesem Ausführungsbeispiel wird bei einer Verdrängung folglich ein Teil des Beutels, welcher mittels der flexiblen Außenwand 110 gebildet ist, in der Ausweichkammer 140 aufgenommen.

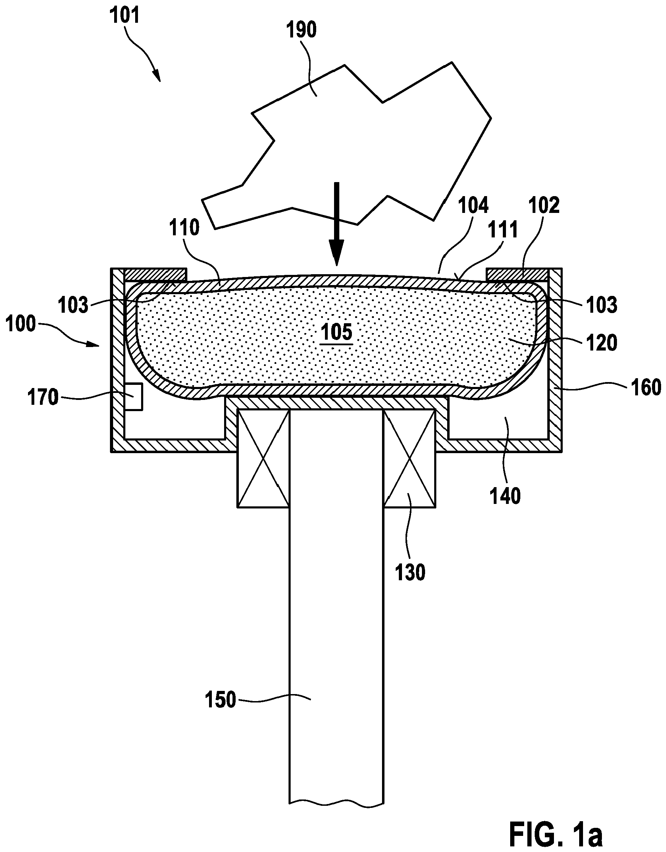

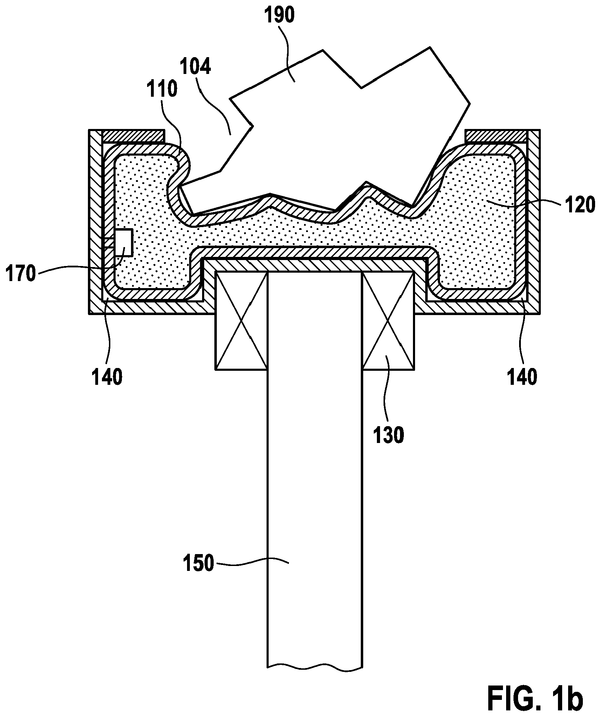

In Figur 1b ist eine Halterung des Objektes 190 mittels der Haltevorrichtung 100 aus Figur la dargestellt, wobei das Objekt 190 mit der flexiblen Außenwand 110 in flächigen und dreidimensionalen Kontakt gebracht wurde. Die flexible Außenwand 110 beziehungsweise der Beutel wird durch diese Kontaktierung verformt und weicht teilweise in die Ausweichkammer 140 aus. Ein mittels des Magneten 130 erzeugtes Magnetfeld fixiert diesen im Wesentlichen formschlüssigen Kontakt durch eine plötzliche Versteifung beziehungsweise eine deutlich erhöhte Viskosität der magnetorheologischen Flüssigkeit 120. Dadurch wird das Objekt 190 mittels des Halteelements 101 der Haltevorrichtung 100 gehalten. Es kann optional vorgesehen sein, einen Drucksensor 170 in der Kammer 105 und/oder der Ausweichkammer 140 anzuordnen, welcher dazu eingerichtet ist, einen Druck der magnetorheologischen Flüssigkeit in der Kammer 105 oder das Ausweichen der magnetorheologischen Flüssigkeit zu erfassen. Mittels des erfassten Druckes oder des erfassten Ausweichens wird eine Stromstärke eines Elektromagneten als Magnet 130 geregelt, wodurch das Magnetfeld eingestellt und die Viskosität der magnetorheologischen Flüssigkeit angepasst wird. Resultierende Haltekräfte auf das Objekt 190 durch die Erhöhung der Viskosität der magnetorheologischen Flüssigkeit können durch diese Einstellung des Magnetfeldes erfasst beziehungsweise kontrolliert und/oder begrenzt werden.

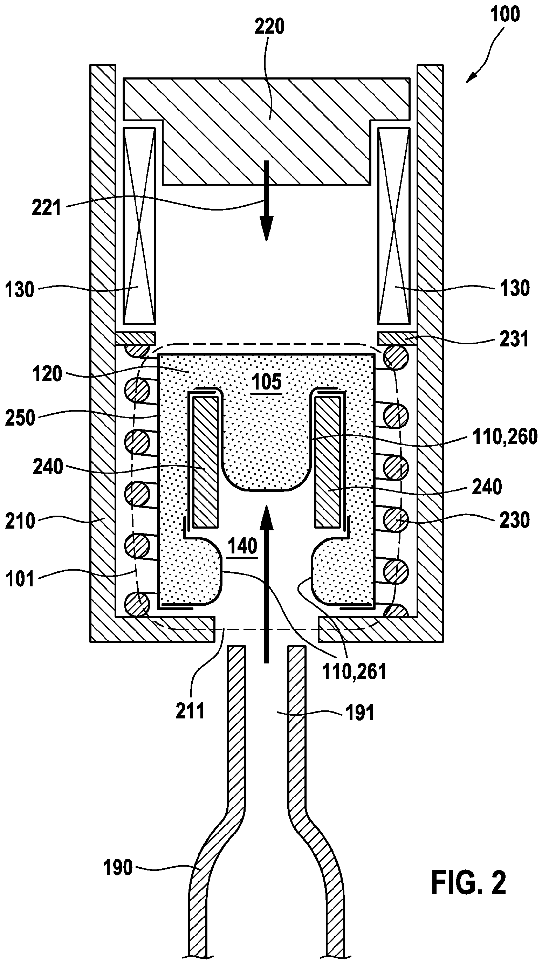

In Figur 2 ist eine Haltevorrichtung 100 mit einem Permanentmagneten als Magnet 130 schematisch dargestellt. Die Haltevorrichtung 100 aus Figur 2 ist vorteilhafterweise dazu eingerichtet, eine Flasche als Objekt 190 luftdicht zu verschließen, insbesondere eine Weinfalsche und/oder eine Sektflasche. Die Haltevorrichtung 100 aus Figur 2 kann dazu eingerichtet sein, beispielsweise durch Veränderung der Breite einer Öffnung 211 eines Gehäuses 210 der Vorrichtung, andere Objekte 190 als Flaschen zu halten. Das Halteelement 101 umfasst in dieser Ausführung einen Container 250, wobei in dem Container 250 die Kammer 105 angeordnet ist. Der Container 250 ist hohl, wobei die äußere Form des Containers 290 insbesondere zylindrisch ist, beispielsweise weist der Container 250 eine Form eines Bechers mit Öffnungen zur Anordnung der flexiblen Außenwand 110 auf. Die Containerwand des Containers 250 umfasst beispielsweise ein steifes Polymer. Mit anderen Worten ist der Container 250 insbesondere nicht flexibel. Es kann insbesondere vorgesehen sein, den Container 250 mittels eines Aufnahmeelementes 240 beziehungsweise einer Anordnungshilfe in der Haltevorrichtung 100 zu positionieren beziehungsweise formschlüssig zu halten. Eine Rückstellfeder 230 für den Magneten 130 ist um den Container 250 herum angeordnet und durch den Container 250 sowie eine Wand des Gehäuses 210 der Haltevorrichtung 100 formschlüssig gehalten. Die Kammer 105 umfasst die magnetorheologische Flüssigkeit 120 des Halteelements 101. An dem Container 250 sind mindestens eine flexible Außenwand 110 angeordnet, insbesondere zwei flexible Außenwände 110 beziehungsweise eine erste flexible Außenwand 260 und eine zweite flexible Außenwand 261, wie in Figur 2 dargestellt. Die erste flexible Außenwand 110, 260 ist dazu eingerichtet, durch die Einführung des Objektes 190 in die Haltevorrichtung 100 in einem flächigen und dreidimensionalen Kontakt mit dem Objekt 190 zu sein, wobei das Objekt 190 gleichzeitig zumindest teilweise in der Ausweichkammer 140 angeordnet ist. Die erste flexible Außenwand 110,260 wird durch den Kontakt mit dem Objekt 190 eingedrückt beziehungsweise verformt, so dass die magnetorheologische Flüssigkeit 120 in die Ausweichkammer 140 durch Verformung einer zweiten flexiblen Außenwand 110,261 ausweicht beziehungsweise verdrängt wird. Die zweite flexible Außenwand 110,261 wird dabei in einen flächigen und dreidimensionalen Kontakt mit dem Objekt 190 gebracht, welches in der Ausweichkammer 140 angeordnet ist, sodass die zweite flexible Außenwand 110,261 das Objekt 190 hält. Die Öffnung 191 des Objektes 190 wird insbesondere durch die erste flexible Außenwand 110, 260 luftdicht verschlossen. Die in Figur 2 dargestellte Haltevorrichtung 100 weist ferner einen Permanentmagneten als Magneten 130 in Form eines Hohlzylinders beziehungsweise einer Hülse beziehungsweise einer Magnethülse auf. Der Magnet 130 ist dazu eingerichtet, mittels eines Drucktasters 220 durch eine Kraft eines Nutzers der Haltevorrichtung 100 oder alternativ mittels eines motorischen Antriebs (nicht dargestellt) in Richtung 221 des Halteelementes 101 verschoben bzw. gedrückt zu werden bis der Magnet 130 als Hülse um das Halteelement 101 herum angeordnet ist. Mit anderen Worten befindet sich das Halteelement 101 vor der Bewegung des Magneten 130 im Wesentlichen außerhalb der Magnetfeldlinien des Magneten 130, wobei das Halteelement 101 nach der Bewegung des Magneten 130 im Wesentlichen innerhalb des Magnetfeldes bzw. des Magnetkreises des Magneten 130 angeordnet ist. Durch die Anordnung des Halteelements 101 im Magnetkreis des Magneten 130 wird die Viskosität der magnetorheologischen Flüssigkeit 120 erhöht, so dass die Halterung des Objektes 190 bzw. der luftdichte Verschluss der Öffnung 191 des Objektes 190 fixiert wird. Zur Rückstellung des Magneten 130 ist, wie in Figur 2 gezeigt, beispielsweise die Rückstellfeder 230 vorgesehen. Die Positionierung des Magneten um das Halteelement 101 herum kann beispielsweise Durchrastnarben oder einen mechanischen Riegel reversibel fixiert werden. Die Feder 230 sowie die Magnethülse des Magneten 130 sind durch die Außenkonturen des zylindrischen Containers 250 sowie mittels der Wand des Gehäuses 210 im Hohlraum des Gehäuses 210 der Haltevorrichtung 100 geführt.

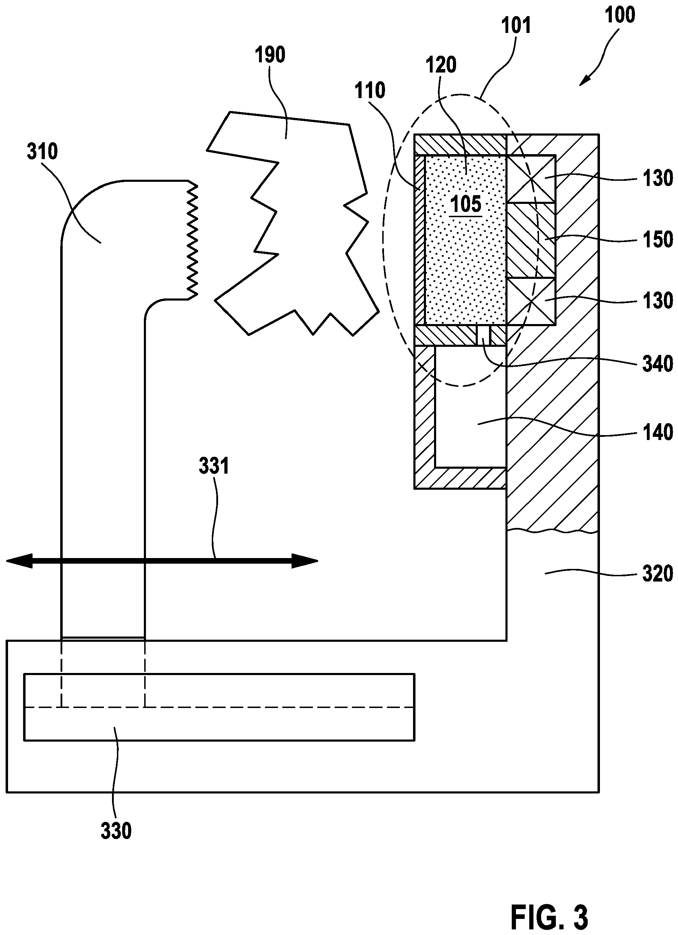

In Figur 3 ist eine Haltevorrichtung 100 mit einem Greifelement 310 schematisch dargestellt. Das Greifelement 310 ist mittels einer Verstelleinrichtung 330 dazu eingerichtet, bewegt zu werden. Die Bewegung erfolgt insbesondere in eine lineare Richtung 331. Das Halteelement 101 ist in dieser Ausführung an einem mechanischen Anschlag 320 der Haltevorrichtung 100 angeordnet, wobei der mechanische Anschlag 320 nicht an dem Greifelement 310 angeordnet ist. Alternativ oder zusätzlich kann das Halteelement an dem Greifelement 310 angeordnet sein (nicht dargestellt). Die Haltevorrichtung 100 ist dazu eingerichtet, ein Objekt 190 durch Bewegung des Greifelements 310 so einzuspannen, dass das Objekt 190 in einen flächigen und dreidimensionalen Kontakt mit der flexiblen Außenwand 110 des Halteelements 101 der Haltevorrichtung 100 gelangt. Dabei wird die flexible Außenwand 110 verformt. Diese Verformung der flexiblen Außenwand 110 des Halteelements 101 erfolgt gemäß den Außenkonturen des Objektes 190. Insbesondere legt sich die flexible Außenwand 110 um die Außenkonturen des Objektes 190. Dadurch weist das Objekt 190 einen flächigen und dreidimensionalen Kontakt mit der flexiblen Außenwand 110 auf. Durch die Verformung bzw. das Eindrücken der flexiblen Außenwand 110 wird ein Teil der magnetorheologischen Flüssigkeit 120 der Kammer 105 in eine Ausweichkammer 140 verdrängt, wobei die magnetorheologische Flüssigkeit 120 zwischen der Kammer 105 und der Ausweichkammer 140 vorzugsweise durch ein optionales Ventil 320 fließt. Das Ventil 320 ist vorteilhafterweise elektrisch verschließbar. Durch eine Ansteuerung beziehungsweise einen Strom in den Wicklungen des Elektromagneten als Magnet 130 der Haltevorrichtung 100 ist die magnetorheologische Flüssigkeit 120 in der Kammer 105 in einem Magnetkreis des Magneten 130 angeordnet, wodurch sich die Viskosität der magnetorheologischen Flüssigkeit 120 erhöht und das Objekt 190 formschlüssig mittels der flexiblen Außenwand 110 gehalten wird. Das Magnetfeld des Magneten 130 wird durch den Magnetkern 150 geführt beziehungsweise verstärkt. Die in Figur 3 dargestellt Haltevorrichtung 100 resultiert trotz der Einspannung durch das Greifelement 310 in sehr geringen Haltekräften, da das Halten im Wesentlichen durch einen Formschluss mittels des Halteelements 101 erzeugt wird.

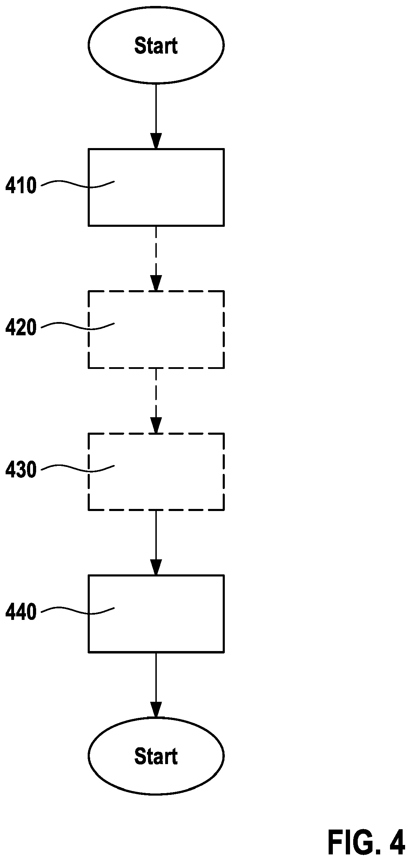

In Figur 4 ist ein Ablaufdiagramm des erfindungsgemäßen Halteverfahrens als Blockschaltbild dargestellt. Das Verfahren beginnt mit einer Bereitstellung 410 des zu haltenden Objektes 190. Es kann in einem optionalen Schritt 420 vorgesehen sein, die Haltevorrichtung zu dem zu haltenden Objekt 190 zu bewegen. In einem weiteren optionalen Schritt 430 kann eine Veränderung einer Position wenigstens eines Greifelements 310 der Haltevorrichtung 100 vorgesehen sein. Die Position wird im Schritt 430 vorteilhafterweise durchgeführt bis das Objekt 190 in der Haltevorrichtung 100 mechanisch eingespannt ist, wobei das Objekt 190 im eingespannten Zustand den flächigen und dreidimensionalen mechanischen Kontakt zu der flexiblen Außenwand 110 des Halteelements 101 der Haltevorrichtung 100 aufweist. Anschließend wird im Schritt 440 die Viskosität einer magnetorheologischen Flüssigkeit 120 eines Halteelements 101 erhöht, wodurch das Objekt 190 mittels der Haltevorrichtung 100 formschlüssig gehalten wird. Diese Erhöhung 440 der Viskosität der magnetorheologischen Flüssigkeit erfolgt vorteilhafterweise durch eine Erhöhung eines Stroms in einem Elektromagneten als Magnet 130, wobei der Elektromagnet in magnetischem Kontakt mit der magnetorheologischen Flüssigkeit 120 des Halteelements 101 ist. Alternativ erfolgt die Erhöhung 440 der Viskosität der magnetorheologische Flüssigkeit 120 durch eine Bewegung eines Permanentmagneten als Magnet 130, wobei die magnetorheologische Flüssigkeit 120 des Halteelements 101 durch die Bewegung des Permanentmagneten in das Magnetfeld gelangt. Es kann im Schritt 440 optional vorgesehen sein, die Erhöhung der Viskosität der magnetorheologischen Flüssigkeit durchzuführen bis in der Kammer 105 des Halteelements 101 und/oder in der Ausgleichskammer 140 ein Druck einen vorgegebenen Schwellenwert überschreitet. Beispeilsweise wird der Strom durch eine Spule des Elektromagneten und/oder eine Bewegung des Permanentmagneten begrenzt.

## Patentansprüche

1. Haltevorrichtung (100), umfassend folgende Komponenten
• einen Magneten (130), und
• ein Halteelement (101), wobei das Halteelement (101) wenigstens eine flexible Außenwand (110) und eine magnetorheologische Flüssigkeit (120) umfasst, wobei die magnetorheologische Flüssigkeit (120) in einer Kammer (105) des Halteelementes (101) angeordnet ist, welche zumindest teilweise von der flexiblen Außenwand (110, 260, 261) verschlossen ist,
wobei die Haltevorrichtung (100) dazu eingerichtet ist, eine Viskosität der magnetorheologischen Flüssigkeit (120) des Halteelements (101) mittels des Magneten (130) zu erhöhen, so dass ein Objekt (190), welches einen flächigen und dreidimensionalen Kontakt mit der flexiblen Außenwand (110) aufweist, formschlüssig gehalten ist.

2. Haltevorrichtung (100) nach Anspruch 1, wobei die flexible Außenwand (110) die Kammer (105) des Halteelements (101) mit der magnetorheologischen Flüssigkeit (120) vollständig als Beutel umschließt.

3. Haltevorrichtung (100) nach einem der vorhergehenden Ansprüche, wobei das Halteelement (101) wenigstens ein Positionierungselement in der Kammer (105) aufweist, welches dazu eingerichtet ist, den verschlossenen Beutel in dem Halteelement (101) innerhalb von Ausbuchtungen oder Durchgangsöffnungen des Beutels zu positionieren und/oder um einen mechanischen Anschlag für ein zu haltendes Objekt (190) in dem Halteelement (101) zu bilden.

4. Haltevorrichtung (100) nach einem der vorhergehenden Ansprüche, wobei die Haltevorrichtung (100) einen Drucksensor (170) umfasst, welcher dazu eingerichtet ist, einen Druck der magnetorheologischen Flüssigkeit in der Kammer (105) und/oder der Ausweichkammer (140) zu erfassen.

5. Haltevorrichtung (100) nach einem der vorhergehenden Ansprüche, wobei die flexible Außenwand (110) dazu eingerichtet ist, ausgerollt zu werden, wenn ein flächiger und dreidimensionaler Kontakt mit dem Objekt (190) vorliegt.

6. Haltevorrichtung (100) nach einem der vorhergehenden Ansprüche, wobei das Halteelement (101) eine Ausweichkammer (140) aufweist, wobei die Ausweichkammer (140) dazu eingerichtet ist, bei Kontakt der flexiblen Außenwand (110) mit dem Objekt (190) zumindest einen Teil einer aus der Kammer (105) verdrängten magnetorheologischen Flüssigkeit (120) aufzunehmen.

7. Haltevorrichtung (100) nach einem der vorhergehenden Ansprüche, wobei die Haltevorrichtung (100) zusätzlich folgende Komponenten umfasst
• wenigstens ein Greifelement (310), und
• wenigstens eine Verstelleinheit (330), wobei die Verstelleinheit (330) dazu eingerichtet ist, eine Position des Greifelements (310) zu verändern,
wobei die Haltevorrichtung (100) dazu eingerichtet ist, ein Objekt (190) durch Bewegung des Greifelements (310) mechanisch einzuspannen, wobei das Objekt (190) im eingespannten Zustand den flächigen und dreidimensionalen mechanischen Kontakt mit der flexiblen Außenwand (110) des Halteelements (101) bildet.

8. Vorrichtung nach Anspruch 7, wobei das Halteelement (101) an einem mechanischen Anschlag (320) der Haltevorrichtung angeordnet ist, welcher insbesondere nicht an dem Greifelement (310) angeordnet ist.

9. Vorrichtung nach Anspruch 7, wobei das Halteelement (101) am Greifelement (310) angeordnet ist.

10. Vorrichtung nach einem der vorhergehenden Ansprüche, wobei die Haltevorrichtung (100) zusätzlich folgende Komponente aufweist
• wenigstens einen Magnetkern (150), wobei der Magnetkern (150) zwischen dem Magneten (130) und der magnetorheologischen Flüssigkeit (120) des Halteelements (101) angeordnet ist.

11. Vorrichtung nach Anspruch 10, wobei die Haltevorrichtung (100) mehrere Magnetkerne (150) umfasst und die Haltevorrichtung (100) mittels des Magneten (130) dazu eingerichtet, die Viskosität einer jeweiligen magnetorheologischen Flüssigkeit (120) in mehreren Halteelementen (101) gleichzeitig zu verändern.

12. Vorrichtung nach einem der vorhergehenden Ansprüche, wobei der Magnet (130) ein beweglich angeordneter Permanentmagnet ist.

13. Vorrichtung nach einem der vorhergehenden Ansprüche, wobei jedes der Greifelemente (310) jeweils einen Magneten (130) und ein Halteelement (101) aufweist.

14. Roboter mit einer Haltevorrichtung (100) nach einem der Ansprüche 1 bis 13.

15. Maschine mit einer Haltevorrichtung (100) nach einem der Ansprüche 1 bis 13.

16. Flaschenverschlussvorrichtung mit einer Haltevorrichtung (100) nach einem der Ansprüche 1 bis 13, insbesondere ist die Flaschenverschlussvorrichtung dazu eingerichtet, Weinflaschen und/oder Sektflaschen luftdicht reversibel zu halten und zu verschließen.

17. Halteverfahren zum Halten eines Objektes (190) mittels einer Haltevorrichtung (100) nach einem der Ansprüche 1 bis 13, umfassend die folgenden Verfahrensschritte
• Bereitstellung (410) des Objektes (190), und
• Erhöhung (440) einer Viskosität einer magnetorheologischen Flüssigkeit (120) eines Halteelements (101), wobei das Objekt (190) einen flächigen und dreidimensionalen mechanischen Kontakt zu einer flexiblen Außenwand (110) mindestens eines Halteelements (101) der Haltevorrichtung (100) aufweist, wodurch das Objekt (190) formschlüssig gehalten wird.

18. Verfahren nach Anspruch 17, wobei zusätzlich folgender Schritt durchgeführt wird
• Veränderung (420) einer Position wenigstens eines Greifelements (310) der Haltevorrichtung (100) bis das Objekt (190) in der Haltevorrichtung (100) mechanisch eingespannt ist, wobei das Objekt (190) im eingespannten Zustand den flächigen und dreidimensionalen mechanischen Kontakt zu der flexiblen Außenwand (110) des Halteelements (101) der Haltevorrichtung (100) aufweist.

19. Verfahren nach einem der Ansprüche 17 oder 18, wobei die Erhöhung (440) der Viskosität der magnetorheologischen Flüssigkeit (120) durch Erhöhung eines Stroms in einem Elektromagneten als Magnet (130) erfolgt, wobei der Elektromagnet in magnetischem Kontakt mit der rheologischen Flüssigkeit (120) des Halteelements (101) ist.

20. Verfahren nach einem der Ansprüche 17 bis 19, wobei die Erhöhung (440) der Viskosität der magnetorheologischen Flüssigkeit (120) erfolgt, bis in der Kammer (105) und/oder in einer Ausgleichskammer (140) des Halteelements (101) ein Druck einen vorgegebenen Schwellenwert überschreitet.
